# EUROPEAN PATENT SPECIFICATION

(11) **EP 1 572 415 B1**
(45) Date of publication and mention of the grant of the patent: **26.07.2006**
(21) Application number: 03785786.9
(22) Date of filing: 09.12.2003
(51) Int. Cl.: B23K 35/00, B23K 35/02, B23K 35/28, C25D 5/44, B32B 15/01

(54) **BRAZING SHEET PRODUCT HAVING A CLAD LAYER AND A COATED LAYER OF IRON ALLOY AND METHOD OF ITS MANUFACTURE**
LÖTFOLIE MIT EINER MANTELSCHICHT UND EINER OBERFLÄCHENSCHICHT AUS EINER EISEN-LEGIERUNG UND VERFAHREN ZU IHRER HERSTELLUNG
PRODUIT DE FEUILLE DE BRASAGE COMPORTANT UNE COUCHE GAINE ET UNE COUCHE DE REVETEMENT EN ALLIAGE DE FER, ET PROCEDE DE FABRICATION DE CE PRODUIT

(30) Priority: 13.12.2002 EP 02027898
(43) Date of publication of application: 14.09.2005
(73) Proprietor: Corus Aluminium Walzprodukte GmbH, 56070 Koblenz (DE)
(72) Inventor: WITTEBROOD, Adrianus, Jacobus, NL-1991 HB Velserbroek (NL); WIJENBERG, Jacques, Hubert, Olga, Joseph, NL-1019 PE Amsterdam (NL)
(74) Representative: van der Donk, Henricus Matheus
(86) International application number: PCT/EP2003/014020
(87) International publication number: WO 2004/054750

(56) References cited:
- WO-A-02/060639
- US-A- 4 039 298
- US-A- 4 098 957
- PATENT ABSTRACTS OF JAPAN vol. 2000, no. 13, 5 February 2001 (2001-02-05) & JP 2000 297338 A (MITSUBISHI ALUM CO LTD), 24 October 2000 (2000-10-24)
- PATENT ABSTRACTS OF JAPAN vol. 1998, no. 04, 31 March 1998 (1998-03-31) & JP 9 310137 A (FURUKAWA ELECTRIC CO LTD:THE), 2 December 1997 (1997-12-02)
- PATENT ABSTRACTS OF JAPAN vol. 0161, no. 19 (M-1225), 25 March 1992 (1992-03-25) & JP 3 285763 A (SHOWA ALUM CORP), 16 December 1991 (1991-12-16)

## Description

The invention relates to a brazing sheet product according to the preamble of claim 1 (see, for example, JP-A-2000/297338). The invention also relates to a method of manufacturing such a brazing sheet product a method of manufacturing a brazing sheet product according to any one of claims 1 to 15, comprising the steps of: (a) providing a brazing sheet product having a core metal sheet, on at least one side of said core sheet a clad layer of an aluminium brazing alloy comprising silicon in an amount in the range of 4 to 14% by weight, (b) pretreating of the outersurface of the clad alloy, and (c) coating a metal layer onto the outersurface of the pretreated outersurface of the clad alloy, said metal layer comprising an iron-X alloy, wherein X is selected from one or more members of the group consisting of tin, zinc, manganese, and copper, and to an assembly of components to be joined by brazing comprising at least one component is such a brazing product an assembly of components to be joined by brazing wherein at least one of the components is a brazing sheet product according to any one of claim 1 to 15..

### DESCRIPTION OF THE RELATED ART

Metals, such as aluminium and aluminium alloys, can be joined by a wide variety of brazing and soldering processes. Brazing, by definition, employs a filler metal or alloy having a liquidus above 450°C and below the solidus of the base metal. Brazing is distinguished from soldering by the melting point of the filler metal: a solder melts below 450°C. Soldering processes are not within the field of the present invention.

Brazing sheet products find wide applications in heat exchangers and other similar equipment. Conventional aluminium brazing sheet products have a core or base sheet, typically an aluminium alloy of the Aluminium Association ("AA")3xxx-series, having on at least one surface of the core sheet clad an aluminium clad layer, the aluminium clad layer being made of an AA4xxx-series alloy comprising silicon in an amount in the range of 4 to 14% by weight, and preferably in the range of 7 to 14% by weight. The aluminium clad layer may be coupled to the core or base alloy in various ways known in the art, for example by means of roll bonding, cladding, explosive cladding, thermal spray-forming or semi-continuous or continuous casting processes.

Controlled Atmosphere Brazing ("CAB") and Vacuum Brazing ("VB") are the two main processes used for industrial scale aluminium brazing. Industrial vacuum brazing has been used since the 1950's, while CAB became popular in the early 1980's after the introduction of the NOCOLOK (trade mark) brazing flux. Vacuum brazing is an essentially discontinuous process and puts high demands on material cleanliness. The disruption of the aluminium oxide layer present is mainly caused by the evaporation of magnesium from the clad alloy. The capital investment for suitable equipment is relatively high.

CAB requires an additional process step prior to brazing as compared to VB, since a brazing flux has to be applied prior to brazing. A brazing flux material for use in brazing aluminium alloys usually consists of mixtures of alkali earth chlorides and fluorides, sometimes containing aluminium fluoride or cryolite. CAB is essentially a continuous process in which, if the proper brazing flux is being used, high volumes of brazed assemblies can be manufactured. The brazing flux dissolves the oxide layer at brazing temperature allowing the clad alloy to flow properly. When the NOCOLOK flux material is used the surface needs to be cleaned thoroughly prior to flux application. To obtain good brazing results the brazing flux has to be applied on the total surface of the brazed assembly. This can cause difficulties with certain types of assemblies because of their design. For example, because evaporator type heat exchangers have a large internal surface, problems can arise because of poor access to the interior. For good brazing results the flux has to adhere to the aluminium surface before brazing. The brazing flux material after drying, however, can easily fall off due to small mechanical vibrations. During the brazing cycle, corrosive fumes such as HF are generated. This puts a high demand on the corrosion resistance of the materials applied for the furnace.

Ideally, a material should be available that can be used for CAB but does not have the requirements and defects of the known brazing flux application. Such a material can be supplied to a manufacturer of brazed assemblies and is ready to use directly after forming of the assembly parts. No additional brazing fluxing operations have to be carried out. Presently, only one process for fluxless brazing is used on an industrial scale. The material for this process can be for example standard brazing sheet made from an AA3xxx-series core alloy clad on one or both sides with a cladding of an AA4xxx-series alloy. Before the brazing sheet can be used the surface has to be modified in such a way that the naturally occurring aluminium oxide layer does not interfere during the brazing cycle. The method of achieving good brazing is to deposit a specific amount of nickel on the surface of the clad alloy. If properly applied, the nickel reacts, presumably exothermically, with the underlying aluminium.

Processes for nickel-plating in an alkaline solution of aluminium brazing sheet are known from each of US-A-3,970,237, US-A-4,028,200, and US-A-4,164,454. According to these documents, nickel or cobalt, or combinations thereof, are deposited in combination with lead. The lead addition is used to improve the wetteability of the aluminium clad alloy during the brazing cycle. An important characteristic of these plating processes is that the nickel is preferentially deposited on the silicon particles of the aluminium clad alloy. To obtain sufficient nickel for brazing, the surface of the aluminium clad alloy should contain a relatively large number of silicon particles to act as nuclei for the nickel deposition. It is believed that to obtain sufficient nucleation sites a part of the aluminium in which the silicon particles are embedded should be removed before pickling by chemical and/or mechanical pre-treatment. This is believed a necessary condition to obtain sufficient silicon coverage to serve as nuclei for the plating action of the brazing or clad alloy. On a microscopic scale the surface of the Si-containing cladding of the brazing sheet is covered with nickel-lead globules. However, the use of lead for the production of a suitable nickel and/or cobalt layer on brazing sheet has several disadvantages. The use of lead for manufacturing products, such as automotive products, is undesirable and it is envisaged that in the very near future there might possibly even be a ban on lead comprising products or products manufactured via one or more intermediate processing steps comprising lead or lead-based components.

The international application no. WO-00/71784, by J.N. Mooij *et al.* discloses a brazing sheet product in which there is provided a very thin bonding layer, preferably applied by plating, comprising zinc or tin between the AlSi-alloy clad layer and the nickel layer in order to improve the bonding of the applied nickel layer. The addition of lead to the nickel layer has been replaced by the addition of bismuth while maintaining the excellent brazeability characteristics of the brazing sheet product.

A drawback of the known brazing sheet products having a layer comprising nickel is the limited corrosion life of brazed products in a SWAAT-test in accordance with ASTM G-85. Corrosion lifetimes without perforations are typically in the range of 4 to 6 days when having an AA3003-series core alloy and thereby restricting possible interesting applications of the brazing sheet product. For several applications, however, of the known nickel-plated brazing sheet in brazed products such a relatively short corrosion lifetime is not detrimental. A good corrosion resistance is considered a valuable property for brazing products used in amongst others heat exchangers, such as radiators and condensers. According to the international application WO-02/060639, by A.J. Wittebrood *et al.* (incorporated herein by reference in its entirety), the corrosion performance of Ni-plated brazing sheet products can be improved considerably by the addition of selected alloying elements, in particular dedicated amounts of tin.

### SUMMARY OF THE INVENTION

It is an object of the present invention to provide a brazing sheet product for use in a brazing operation, ideally a fluxless CAB brazing operation, and wherein the brazing sheet product has as compared to Ni-plated brazing sheet products an improved post-braze corrosion resistance when measured in a SWAAT-test in accordance with ASTM G-85.

It is a further object of the present invention to provide a method of manufacturing the brazing sheet product.

The invention relates to a brazing sheet product comprising a core metal sheet, on at least one side of the core sheet a clad layer of an aluminium brazing alloy comprising silicon in an amount in the range of 4 to 14% by weight, and further comprising on at least one outersurface of the clad layer a plated layer of iron-X alloy, whereby X is selected from one or more members of the group consisting of tin, zinc, manganese, and copper, and such that the clad layer and all layers exterior thereto form a metal filler for a brazing operation and having a composition with the proviso that the mol-ratio of Fe:X is in the range of 10:(0.3 to 6). A brazing sheet product comprising a core metal sheet, on at least one side of said core sheet a clad layer of an aluminium brazing alloy comprising silicon in an amount in the range of 4 to 14% by weight, **characterised in that** the brazing sheet product further comprises on at least one outersurface of said clad layer a coated layer of iron-X alloy, whereby X is selected from one or more members of the group consisting of tin, zinc, manganese, and copper, and such that the clad layer and all layers exterior thereto form a metal filler for a brazing operation and having a composition with the proviso that the mol-ratio of Fe:X is in the range of 10:(0.3 to 6). The invention also relates to a method of manufacturing such a brazing product, a method of manufacturing a brazing sheet product according to any one of claims 1 to 15, comprising the steps of: (a) providing a brazing sheet product having a core metal sheet, on at least one side of said core sheet a clad layer of an aluminium brazing alloy comprising silicon in an amount in the range of 4 to 14% by weight, (b) pretreating of the outersurface of the clad alloy, and (c) coating a metal layer onto the outersurface of the pretreated outersurface of the clad alloy, said metal layer comprising an iron-X alloy, wherein X is selected from one or more members of the group consisting of tin, zinc, manganese, and copper and to an assembly of components to be joined by brazing comprising at least one component is such a brazing product an assembly of components to be joined by brazing wherein at least one of the components is a brazing sheet product according to any one of claim 1 to 15.

### DETAILED DESCRIPTION OF THE PREFERRED EMBODIMENTS

In accordance with the invention in one aspect there is provided a brazing sheet product comprising a core metal sheet, on at least one side of the core sheet a clad layer of an aluminium brazing alloy comprising silicon in an amount in the range of 4 to 14% by weight, preferably in the range of 7 to 14%, and further comprising on at least one outersurface of the clad layer a plated layer of iron-X alloy, whereby X is selected from one or more members of the group consisting of tin, zinc, manganese, and copper, and such that the clad layer and all layers exterior thereto form a metal filler for a brazing operation and having a composition with the proviso that the mol-ratio of Fe:X is in the range of 10:(0.3 to 6), and preferably in the range of 10:(0.5 to <5).

The plated iron-X alloy has been found to initiate the exothermic reaction during brazing in the absence of a brazing flux material such as the known NOCOLOK flux. It is believed that an upper layer of only iron is sensitive to oxidation. The surface iron-oxides formed might adversely influence the brazing process and/or any forming operation of the brazing sheet product prior to brazing. It has been found that a plated Fe-X alloy layer forms a thin stable surface oxide film in air. Further oxidation in air takes essentially place only at temperatures above about 300°C, which is significantly above any storage or handling temperature prior to a brazing operation. The metal X is selected such that it assists in reducing the surface tension of the molten filler metal during a brazing operation. The metal X can improve also the post-braze corrosion performance of the brazing product, in particular when subjected to a SWAAT environment. In the brazing sheet product according to the invention, and in particular those having an AA3xxx-series core alloy, post-braze SWAAT corrosion lifetimes without perforations according to ASTM G-85 exceed 21 days, and in the best examples exceed 26 days, which is a significant improved over the prior art, including in comparison to conventional NOCOLOK brazing for products having the same aluminium core alloy. The best results have been achieved by plating an iron-tin alloy. The brazing sheet product can be fluxless brazed under controlled atmosphere conditions in the absence of a brazing flux material while achieving very good post-braze corrosion performance significantly enhancing the possibilities of application of the brazing sheet product.

For applying the plated Fe-X alloy several electrolytes can be used, such as for example pyrophosphate for plating an Fe-Sn alloy or Fe-Sn-Bi alloy.

In an embodiment of the brazing sheet product the layer comprising iron-X alloy is formed by an electrolytic plating method. However, other techniques such as plating, thermal dipping, thermal spraying, Chemical Vapour Deposition ("CVD") and Physical Vapour Deposition ("PVD") or other techniques for depositing of metals or metal alloys from a gas or vapour phase may be used.

The applied Fe-X alloy layer has a thickness of at most 1.8µm, preferably at most 1.0µm. A coating thickness of more than 1.8µm requires a prolonged treatment time for plating, and may result in wrinkling of the molten filler metal during a subsequent brazing operation. A preferred minimum thickness for this iron-X layer is about 0.03µm, and more preferably 0.10µm.

In an embodiment of the brazing sheet product there is a layer comprising iron or iron alloy between the outersurface of the clad layer and the plated layer of iron-X alloy, the layer comprising iron or iron alloy is preferably formed by an electrolytic plating method. Preferably the layer comprises 80 weight % or more of iron, more preferably 85 weight % or more of iron, still more preferably 90 weight % or more of iron, and most preferably of 96 weight % or more of iron or 98 weight % or more of iron. The applied iron or iron alloy layer is to ensure that there is sufficient unalloyed iron left in the filler metal to initiate the presumed exothermic reaction during the brazing cycle. The layer comprising iron or iron alloy may have a different composition compared to the iron-X alloy layer because the presence of metal X is not mandatory in the iron or iron alloy layer.

Alternatively, the layer comprising iron or iron alloy is applied on top of the iron-X alloy layer such as the form a braze-promoting duplex layer. The inner layer is formed by the iron-X alloy layer and the outer layer is formed by the iron or iron alloy layer.

Also, to form the layer comprising iron or iron alloy, other techniques such as plating, thermal dipping, thermal spraying, CVD and PVD or other techniques for depositing of metals or metal alloys from a gas or vapour phase may be used. The applied layer of iron or iron alloy, e.g. Fe or Fe-Bi, having 80 weight % or more of iron, more preferably 85 weight % or more of iron, still more preferably 90 weight % or more of iron, and most preferably of 96 weight % or more of iron or 98 weight % or more of iron, has a thickness of at most 2.0µm, preferably at most 1.0µm, and more preferably in the range of 0.05 to 0.5µm. A coating thickness of more than 2.0µm requires a prolonged treatment time for plating, and may result in wrinkling of the molten filler metal during a subsequent brazing operation. A preferred minimum thickness for this iron or iron alloy layer is about 0.10µm.

Preferably each of the applied layers, e.g. the iron or iron alloy layer and the plated iron-X layer, are essentially lead-free from an environmental point of view.

In an embodiment each of the applied layers, viz. the optional iron or iron alloy layer and plated iron-X layer are essentially nickel-free. In addition, the presence of nickel may have a detrimental influence of the post-braze corrosion performance of the brazing product. Another advantage is that iron salts used for the plating bath as compared to nickel salts are relatively inexpensive and are non-toxic.

In an embodiment the brazing sheet product according to the invention is further characterised by an optional thin layer as an intermediate bonding layer, preferably comprising zinc or tin, between the outersurface of the AISi-alloy clad layer and the thin layer comprising iron or iron alloy or between the outersurface of the AlSi-alloy clad layer and the plated layer of iron-X alloy. With the intermediate bonding layer, more preferably of zinc, a very effective bond between the AlSi-alloy clad layer and the thin layer comprising iron or iron alloy is formed, the bond remaining effective during subsequent deformation of the brazing product, for example in a bending operation. Preferably the intermediate bonding layer has a thickness of at most 0.5µm, more preferably at most 0.3µm, and most preferably in the range of 0.01 to 0.15µm. In the best results obtained a thickness of about 20 to 30nm has been used. It has been found that the thin bonding layer has no detrimental effect on the post-braze corrosion performance of the brazing product according to the invention.

To form the intermediate bonding layer, techniques such as plating, electroplating, thermal dipping, thermal spraying, CVD and PVD or other techniques for depositing of metals or metal alloys from a gas or vapour phase may be used.

The core metal sheet can be of steel, aluminised steel, stainless steel, plated or coated stainless steel, bronze, brass, nickel, nickel alloy, titanium, or plated or coated titanium.

In an embodiment of the brazing sheet product the core sheet is an aluminium alloy, and is preferably selected from the group consisting of AA3xxx, AA5xxx, and AA6xxx-series aluminium alloy.

In an embodiment each AlSi-alloy clad layer has a thickness ranging from about 2 to 20% of the total thickness of the total brazing sheet product thickness. Typical aluminium clad layer thickness is in the range of 40 to 80 micron. The aluminium core sheet has a thickness typically in a range of at most 5 mm, more preferably in the range of 0.1 to 2 mm.

In an embodiment taken together the AlSi-alloy clad layer and all layers exterior thereto form a filler metal for a brazing operation and together has a composition comprising at least, by weight percent:
Si in the range of 5 to 14 %,
Fe in the range of 0.15 to 8%, preferably 0.9 to 5%,
X in the range of 0.01 to 7%, preferably 0.35 to 2%, and whereby X is selected from one or more members of the group consisting of Sn, Zn, Mn, and Cu,
Sn in the range of 0.0 to 0.3% if not present as X,
Zn in the range of 0.0 to 0.3% if not present as X,
Mn in the range of 0.0 to 0.3% if not present as X,
Cu in the range of 0.0 to 0.3% if not present as X,
optionally one or more of Bi, Sb, In, and Pb (preferably the sum of Bi, Sb, In and Pb is not more than 0.4%), and whereby:
   Bi in the range of 0.0 to 0.3%,
   Sb in the range of 0.0 to 0.3%,
   In in the range of 0.0 to 0.3%,
   Pb in the range of 0.0 to 0.3%.
Ti in the range of 0.0 to 0.1 %,
Sr in the range of 0.0 to 0.1 %,
Mg in the range of 0.0 to 5%,
balance aluminium and inevitable impurities,
and with the proviso that the mol-ratio of Fe:X is in the range of 10:(0.3 to 6), and preferably in the range of 10:(0.5 to <5).

When the mol-ratio of Fe:X is too low no significant improvement in the post-braze corrosion life may be found. It has been found that if the mol-ratio becomes too high, then the brazeability becomes less efficient. From an environmental point of view the use of lead in the filler metal is preferably avoided.

In accordance with the invention in another aspect there is provided a method of manufacturing of a brazing sheet, which method comprises the steps of (a) providing a brazing sheet product having a core metal sheet, on at least one side of the core sheet a clad layer of an aluminium brazing alloy comprising silicon in an amount in the range of 4 to 14% by weight, (b) pretreating of the outersurface of the clad alloy, and (c) plating a metal layer onto the outersurface of the pretreated outersurface of the clad alloy, the metal layer comprising an iron-X alloy, whereby X is selected from one or more members of the group consisting of tin, zinc, manganese, and copper.

According to this aspect of the invention there is provided a method of manufacturing an iron-alloy plated brazing sheet product, such as an iron-tin alloy, the plated iron-alloy layer improving the post-braze corrosion performance as measured in a SWAAT-test of the resultant product as compared to product having a similar core and clad layer but instead having a plated nickel or nickel-alloy layer. The post-braze corrosion performance as measured in a SWAAT test is also better in comparison to conventional NOCOLOK brazing for products having the same aluminium core alloy and clad alloy devoid of any applied iron or nickel layer.

In the embodiment where the metal X is tin, it has been found that an upper layer of pure tin metal is sensitive to progressive oxidation in pre-braze conditions, in particular under humid conditions. The surface oxides formed might adversely influence the brazing process. By providing the tin in the form of a plated iron-tin layer essentially no free tin is available anymore and thereby is avoided the occurrence of the detrimental progressive oxidation of the tin. It has been found that a plated Fe-Sn alloy layer forms a thin stable surface oxide film in air. Further oxidation in air takes essentially place only at temperatures above about 320°C.

The adhesion of the iron or iron alloy or iron-X alloy layer to the cladding of a brazing sheet product is fairly good, but may be further improved by a proper pre-treatment of the outersurface of the clad brazing layer on which the iron or iron alloy or iron-X alloy layer is being deposited. The pre-treatment comprises a preliminary cleaning step during which the surface is made free from grease, oil, or buffing compounds. This can be accomplished in various ways, and can be done amongst other ways by vapour degreasing, solvent washing, or solvent emulsion cleaning. Also, a mild etching may be employed. Following the preliminary cleaning, the surface should preferably be conditioned. Several methods can be applied successfully, such as, those set out in the international application WO-01/88226 of J.N. Mooij *et al.,* incorporated herein by reference, on page 9, line 29 to page 10, line 21. Another useful method is set out in the international application WO-02/086197 of J.N. Mooij *et al.,* on page 1, lime 22 to page 5, line 23, incorporated herein by reference.

In an embodiment the method according to the invention is further characterised by a pre-treatment of depositing a thin layer as an intermediate bonding layer, preferably comprising zinc or tin, between the outersurface of the AlSi-alloy layer and the layer comprising iron or iron alloy or iron-X alloy. With this intermediate bonding layer a very effective bond between the AlSi-alloy layer and the thin layer comprising iron or iron alloy is formed, the bond remaining effective during subsequent deformation of the brazing sheet product, for example in a bending operation. The most suitable methods of applying such an intermediate layer of zinc is by means of direct or immersion plating. Preferably the applied intermediate bonding layer has a thickness of at most 0.5µm, more preferably at most 0.3µm, and most preferably in the range of 0.01 to 0.15µm. In the best results obtained a thickness of about 30nm has been used. A coating thickness of more than 0.5µm is thought to have no further advantages for improving the adhesion.

The invention further relates to the use of an iron-tin plating bath for the deposition of a layer comprising iron and tin on a brazing sheet product for use in a brazing operation, in particular a fluxless CAB operation. Several Fe-Sn alloy baths can be used, e.g. pyrophosphate electrolytes operating at pH in the range of 8 to 11, preferably 8 to 9. Others are for example Fe-Sn or Sn-Fe alloys from chloride-sulfate baths.

The invention further provides an assembly of components, for example a heat exchanger, typically for automotive applications, or a fuel cell, typically an electrochemical fuel cell, to be joined by brazing, whereby at least one of the components being a brazing sheet product as set out above. The brazing operation is preferably carried out in an inert atmosphere (CAB) in the absence of a brazing flux material or under a vacuum.

It is provided a brazed assembly not covered by the present invention wherein at least one of the components to be joined by brazing is made of the brazing sheet product set out above in accordance with the invention described above, and at least one other component is made of steel, aluminised steel, stainless steel, plated or coated stainless steel, bronze, brass, nickel, nickel alloy, titanium, or plated or coated titanium.

Having now fully described the invention, it will be apparent to one of ordinary skill in the art that many changes and modifications can be made without departing from the scope of the invention as hereon described and defined in the appended claims.

## Claims

1. A brazing sheet product comprising a core metal sheet, on at least one side of said core sheet a clad layer of an aluminium brazing alloy comprising silicon in an amount in the range of 4 to 14% by weight, **characterised in that** the brazing sheet product further comprises on at least one outersurface of said clad layer a coated layer of iron-X alloy, whereby X is selected from one or more members of the group consisting of tin, zinc, manganese, and copper, and such that the clad layer and all layers exterior thereto form a metal filler for a brazing operation and having a composition with the proviso that the mol-ratio of Fe:X is in the range of 10:(0.3 to 6).

2. The brazing sheet product according to claim 1, wherein the layer comprising iron-X alloy is formed by a plating method, preferably formed by an electrolytic plating method.

3. The brazing sheet product according to claim 1, wherein the layer comprising iron-X alloy is formed by a PVD method.

4. The brazing sheet product according to claim 1, wherein the layer comprising iron-X alloy is formed by a thermal spraying method.

5. The brazing sheet product according to any one of claims 1 to 4, wherein there is a layer comprising iron or iron alloy between the outersurface of said clad layer and the layer of iron-X alloy, preferably formed by an electrolytic plating method.

6. The brazing sheet product according to claim 5, wherein there is a layer as a bonding layer between said outersurface of said clad layer and said layer comprising iron or iron alloy.

7. The brazing sheet product according to claim 5, wherein there is a layer comprising zinc or tin as a bonding layer between said outersurface of said clad layer and said layer comprising iron or iron alloy.

8. The brazing sheet product according to any one of claims 1 to 7, wherein there is a layer a bonding layer between said outersurface of said clad layer and the layer of iron-X alloy.

9. The brazing sheet product according to any one of claims 1 to 7, wherein there is a layer comprising zinc or tin as a bonding layer between said outersurface of said clad layer and the layer of iron-X alloy.

10. The brazing sheet product according to any one of claims 6 to 9, wherein said bonding layer has a thickness of not more than 0.5 micron, preferably of not more than 0.3 micron.

11. The brazing sheet product according to any one of claims 1 to 10, wherein the applied layer of Fe-X alloy has a thickness of at most 1.8 micron, and preferably of at most 1.0 micron.

12. The brazing sheet product according to any one of claims 1 to 11, wherein the applied layer of Fe-X alloy comprises 80 wt.% or more of iron, and preferably 90 wt.% or more.

13. The brazing sheet product according to any one of claims 1 to 12, wherein the core metal sheet comprises a member of the group consisting of aluminium alloy, steel, aluminised steel, stainless steel, plated or coated stainless steel, bronze, brass, nickel, nickel alloy, titanium, and plated or coated ,titanium.

14. The brazing sheet product according to any one of claims 1 to 12, wherein the core metal sheet is made of an aluminium alloy, preferably selected from the group consisting of AA3xxx, AA5xxx, and AA6xxx-series aluminium alloys.

15. The brazing sheet product according to any one of claims 1 to 14, wherein taken together the clad layer comprising silicon in an amount in the range of 4 to 14% by weight and all layers exterior thereto form a filler metal for a brazing operation and having a composition comprising at least, by weight percent:
Si in the range of 5 to 14 %,
Fe in the range of 0.15 to 8%,
X in the range of 0.01 to 7%, and wherein X is selected from one or more members of the group consisting of Sn, Zn, Mn, and Cu.
Sn in the range of 0.0 to 0.3% if not present as X,
Zn in the range of 0.0 to 0.3% if not present as X,
Mn in the range of 0.0 to 0.3% if not present as X,
Cu in the range of 0.0 to 0.3% if not present as X,
optionally one or more of Bi, Sb, In and Pb, wherein:
Bi in the range of 0.0 to 0.3%,
Sb in the range of 0.0 to 0.3%,
In in the range of 0.0 to 0.3%,
Pb in the range of 0.0 to 0.3%,
Ti in the range of 0.0 to 0.1%,
Sr in the range of 0.0 to 0.1%,
Mg in the range of 0.0 to 5%,
balance aluminium and inevitable impurities,
and with the proviso that the mol-ratio of Fe:X is in the range of 10:(0.3 to 6), and preferably in the range of 10:(0.5 to <5).

16. A method of manufacturing a brazing sheet product according to any one of claims 1 to 15, comprising the steps of: (a) providing a brazing sheet product having a core metal sheet, on at least one side of said core sheet a clad layer of an aluminium brazing alloy comprising silicon in an amount in the range of 4 to 14% by weight, (b) pretreating of the outersurface of the clad alloy, and (c) coating a metal layer onto the outersurface of the pretreated outersurface of the clad alloy, said metal layer comprising an iron-X alloy, wherein X is selected from one or more members of the group consisting of tin, zinc, manganese, and copper.

17. The method according to claim 16, wherein during step (b) the outersurface of the clad layer is pretreated by applying a bonding layer.

18. The method according to claim 16 or 17, wherein during step (b) the outersurface of the clad layer is pretreated by applying a bonding layer of zinc or tin.

19. The method according to any one of claims 16 to 18, wherein after applying said bonding layer and before applying the metal layer comprising an iron-X alloy, there is applied, preferably by plating, a layer comprising more than 85% by weight of iron.

20. The method according to any one of claims 16 to 19, wherein the metal layer is coated onto the outersurface of the pretreated outersurface of the clad alloy by plating.

21. The method according to any one of claims 16 to 19, wherein the metal layer is coated onto the outersurface of the pretreated outersurface of the clad alloy by PVD.

22. An assembly of components to be joined by brazing wherein at least one of the components is a brazing sheet product according to any one of claim 1 to 15.

23. The assembly according to claim 22, wherein the assembly can be brazed under a vacuum or in an inert atmosphere in the absence of a brazing-flux material.

## Patentansprüche

1. Hartlöt-Blechprodukt mit einem Kernmetallblech und auf wenigstens einer Seite des Kernblechs einer Plattierschicht aus einer Aluminium-Hartlötlegierung, welche Silizium in einer Menge im Bereich von 4 bis 14 Gew.-% enthält,
**dadurch gekennzeichnet,**
**dass** das Hartlötblechprodukt ferner auf wenigstens einer Außenfläche der Plattierschicht eine beschichtete Schicht aus Eisen-X-Legierung enthält, wobei ausgewählt ist aus einem oder mehreren Mitgliedern der Gruppe bestehend aus Zinn, Zink, Mangan und Kupfer, wobei die Plattierschicht und alle weiter außen angeordneten Schichten einen Metallzusatz für einen Hartlötvorgang bilden und eine Zusammensetzung mit der Bedingung aufweisen, dass das Mol-Verhältnis von Fe:X im Bereich von 10:(0,3 bis 6) liegt.

2. Hartlöt-Blechprodukt nach Anspruch 1, wobei die Eisen-X-Legierung enthaltende Schicht durch ein Plattierverfahren gebildet wird, vorzugsweise durch ein elektrolytisches Plattierverfahren.

3. Hartlöt-Blechprodukt nach Anspruch 1, wobei die Eisen-X-Legierung enthaltende Schicht durch ein PVD-Verfahren gebildet wird.

4. Hartlöt-Blechprodukt nach Anspruch 1, wobei die Eisen-X-Legierung enthaltende Schicht durch ein thermisches Sprüh-Verfahren gebildet wird.

5. Hartlöt-Blechprodukt nach einem der Ansprüche 1 bis 4, bei welchem eine Eisen oder eine Eisen-Legierung enthaltende Schicht zwischen der Außenfläche der Plattierschicht und der Schicht aus Eisen-X-Legierung angeordnet ist, welche vorzugsweise durch ein elektrolytisches Plattierverfahren gebildet wird.

6. Hartlöt-Blechprodukt nach Anspruch 5, bei welchem eine Schicht als Bindeschicht zwischen der Außenfläche der Plattierschicht und der Schicht angeordnet ist, die Eisen oder Eisen-Legierung enthält.

7. Hartlöt-Blechprodukt nach Anspruch 5, bei welchem eine Zink oder Zinn enthaltende Schicht als Bindeschicht zwischen der Außenfläche der Plattierschicht und der Schicht angeordnet ist, die Eisen oder Eisen-Legierung enthält.

8. Hartlöt-Blechprodukt nach einem der Ansprüche 1 bis 7, bei welchem eine Schicht als Bindeschicht zwischen der Außenfläche der Plattierschicht und der Schicht aus Eisen-X-Legierung angeordnet ist.

9. Hartlöt-Blechprodukt nach einem der Ansprüche 1 bis 7, bei welchem eine Zink oder Zinn enthaltende Schicht als Bindeschicht zwischen der Außenfläche der Plattierschicht und der Schicht aus Eisen-X-Legierung angeordnet ist.

10. Hartlöt-Blechprodukt nach einem der Ansprüche 6 bis 9, bei welchem die Bindeschicht eine Dicke von nicht mehr als 0,5 µm, vorzugsweise nicht mehr als 0,3 µm, aufweist.

11. Hartlöt-Blechprodukt nach einem der Ansprüche 1 bis 10, bei welchem die aufgebrachte Schicht aus Fe-X-Legierung eine Dicke von höchstens 1,8 µm und vorzugsweise von höchstens 1,0 µm aufweist.

12. Hartlöt-Blechprodukt nach einem der Ansprüche 1 bis 11, bei welchem die aufgebrachte Schicht aus Fe-X-Legierung 80 Gew.-% oder mehr Eisen und vorzugsweise 90 Gew.-% oder mehr Eisen enthält.

13. Hartlöt-Blechprodukt nach einem der Ansprüche 1 bis 12, bei welchem das Kernmetallblech ein Mitglied der Gruppe bestehend aus Aluminium-Legierung, Stahl, aluminisiertem Stahl, rostfreiem Stahl, plattierten oder beschichteten rostfreiem Stahl, Bronze, Messing, Nickel, Nickellegierung, Titan und plattiertem oder beschichtetem Titan umfasst.

14. Hartlöt-Blechprodukt nach einem der Ansprüche 1 bis 12, bei welchem das Kernmetallblech aus einer Aluminium-Legierung hergestellt ist, vorzugsweise ausgewählt aus der Gruppe bestehend aus Aluminium-Legierungen der AA3xxx-, AA5xxx- und AA6xxx-Serie.

15. Hartlöt-Blechprodukt nach einem der Ansprüche 1 bis 14, bei welchem die Plattierschicht, die Silizium in einer Menge im Bereich von 4 bis 14 Gew.-% enthält, und alle weiter außerhalb gelegenen Schichten einen Metallzusatz für einen Hartlötvorgang bilden und insgesamt eine Zusammensetzung aufweisen, die, in Gew.-%, wenigstens umfasst:
- Si in einem Bereich von 5 bis 14%,
- Fe in einem Bereich von 0,15 bis 8%,
- X in einem Bereich von 0,01 bis 7%, wobei X ausgewählt ist aus einem oder mehreren Mitgliedern der Gruppe bestehend aus Sn, Zn, Mn und Cu.
- Sn in einem Bereich von 0,0 bis 0,3%, falls nicht als X vorhanden,
- Zn in einem Bereich von 0,0 bis 0,3%, falls nicht als X vorhanden,
- Mn in einem Bereich von 0,0 bis 0,3%, falls nicht als X vorhanden,
- Cu in einem Bereich von 0,0 bis 0,3%, falls nicht als × vorhanden,
- optional eines oder mehrere von Bi, Sb, In und Pb, wobei:
Bi in einem Bereich von 0,0 bis 0,3%,
Sb in einem Bereich von 0,0 bis 0,3%,
In in einem Bereich von 0,0 bis 0,3%,
Pb in einem Bereich von 0,0 bis 0,3%.
- Ti in einem Bereich von 0,0 bis 0,1%,
- Sr in einem Bereich von 0,0 bis 0,1%,
- Mg in einem Bereich von 0,0 bis 0,5%,
- Rest Aluminium und unvermeidbare Verunreinigungen,
- und mit der Bedingung, dass das Mol-Verhältnis von Fe:X in einem Bereich von 10: (0,3 bis 6) und vorzugsweise im Bereich von 10:(0,5 bis >5) liegt.

16. Verfahren zur Herstellung eines Hartlöt-Blechproduktes nach einem der Ansprüche 1 bis 15, umfassend die folgenden Schritte: (a) Bereitstellen eines Hartlöt-Blechproduktes mit einem Kernmetallblech und auf wenigstens einer Seite des Kernmetallblechs einer Plattierschicht aus einer Aluminium-Hartlötlegierung, welche Silizium in einer Menge im Bereich von 4 bis 14 Gew.-% enthält, (b) Vorbehandeln der Außenfläche der Plattierlegierung, und (c) Beschichten einer Metallschicht auf die Außenfläche der vorbehandelten Außenfläche der Plattierlegierung, wobei die Metallschicht eine Eisen-X-Legierung enthält, wobei X ausgewählt ist aus einem oder mehreren Mitgliedern der Gruppe bestehend aus Zinn, Zink, Mangan und Kupfer.

17. Verfahren nach Anspruch 16, bei welchem während Schritt (b) die Außenfläche der Plattierschicht durch Aufbringen einer Bindeschicht vorbehandelt wird.

18. Verfahren nach Anspruch 16 oder 17, bei welchem während Schritt (b) die Außenfläche der Plattierschicht durch Aufbringen einer Bindeschicht aus Zink oder Zinn vorbehandelt wird.

19. Verfahren nach einem der Ansprüche 16 oder 18, bei welchem nach Aufbringen der Bindeschicht und vor dem Aufbringen der eine Eisen-X-Legierung enthaltenden Metallschicht, vorzugsweise durch Plattieren eine Schicht aufgebracht wird, die mehr als 85 Gew.-% Eisen enthält.

20. Verfahren nach einem der Ansprüche 16 bis 19, bei welchem die Metallschicht auf der Außenfläche einer vorbehandelten Außenfläche der Plattierschicht durch Plattieren aufgebracht wird.

21. Verfahren nach einem der Ansprüche 16 bis 19, bei welchem die Metallschicht auf eine Außenfläche der vorbehandelten Außenfläche der Plattierlegierung durch PVD aufgebracht wird.

22. Anordnung aus Bauteilen, die durch Hartlöten verbunden werden sollen, wobei wenigstens eines der Bauteile ein Hartlötblechprodukt nach einem der Ansprüche 1 bis 15 ist.

23. Anordnung nach Anspruch 22, bei welchem die Anordnung unter einem Vakuum oder in einer Schutzgasatmosphäre in Abwesenheit eines Hartlötflussmittels hartgelötet werden kann.

## Revendications

1. Produit de type feuille de brasage comprenant une feuille métallique de coeur, sur au moins un côté de ladite feuille de coeur, une couche plaquée d'un alliage de brasage à base d'aluminium comprenant du silicium à hauteur de 4 à 14 pour cent en poids, produit **caractérisé en ce que** le produit de type feuille de brasage comprend en outre sur au moins une surface extérieure de ladite couche plaquée une couche revêtue d'alliage de type fer-X, où X est choisi parmi un ou plusieurs des éléments du groupe constitué d'étain, de zinc, de manganèse et de cuivre, et tel que la couche plaquée et l'ensemble des couches qui lui sont extérieures forment un métal d'apport destiné à une opération de brasage, et dont la composition vérifie la condition suivante : le rapport molaire Fe/X se situe dans l'intervalle allant de 10/0,3 à 10/6.

2. Produit de type feuille de brasage selon la revendication 1, dans lequel la couche comprenant un alliage fer-X est formée selon un procédé de placage, formée de préférence selon un procédé de placage électrolytique.

3. Produit de type feuille de brasage selon la revendication 1, dans lequel la couche comprenant un alliage fer-X est formée selon un procédé de PVD.

4. Produit de type feuille de brasage selon la revendication 1, dans lequel la couche comprenant un alliage fer-X est formée selon un procédé de métallisation à chaud.

5. Produit de type feuille de brasage selon l'une quelconque des revendications 1 à 4, dans lequel on trouve une couche comprenant du fer ou un alliage de fer entre la surface extérieure de ladite couche plaquée et la couche d'alliage de fer-X, formée de préférence selon un procédé de placage électrolytique.

6. Produit de type feuille de brasage selon la revendication 5, dans lequel on trouve une couche formant couche de liaison entre ladite surface extérieure de ladite couche plaquée et ladite couche comprenant du fer ou un alliage de fer.

7. Produit de type feuille de brasage selon la revendication 5, dans lequel on trouve une couche comprenant du zinc ou de l'étain en tant que couche de liaison entre ladite surface extérieure de ladite couche plaquée et ladite couche comprenant du fer ou un alliage de fer.

8. Produit de type feuille de brasage selon l'une quelconque des revendications 1 à 7, dans lequel on trouve une couche en tant que couche de liaison entre ladite surface extérieure de ladite couche plaquée et la couche d'alliage de fer-X.

9. Produit de type feuille de brasage selon l'une quelconque des revendications 1 à 7, dans lequel on trouve une couche comprenant du zinc ou de l'étain en tant que couche de liaison entre ladite surface extérieure de ladite couche plaquée et la couche d'alliage de fer-X.

10. Produit de type feuille de brasage selon l'une quelconque des revendications 6 à 9, dans lequel l'épaisseur de ladite couche de liaison ne dépasse pas 0,5 micron, étant de préférence inférieure ou égale à 0,3 micron.

11. Produit de type feuille de brasage selon l'une quelconque des revendications 1 à 10, dans lequel l'épaisseur de la couche appliquée d'alliage de fer-X vaut 1,8 microns au plus, et 1,0 micron au maximum de préférence.

12. Produit de type feuille de brasage selon l'une quelconque des revendications 1 à 11, dans lequel le poids de la couche appliquée d'alliage de fer-X comprend au moins 80 % de fer et au moins 90 % de fer de préférence.

13. Produit de type feuille de brasage selon l'une quelconque des revendications 1 à 12, dans lequel la couche métallique de coeur comprend un membre du groupe constitué d'alliage d'aluminium, d'acier, d'acier aluminé, d'acier inoxydable, d'acier inoxydable plaqué ou revêtu, de bronze, de laiton, de nickel, d'alliage de nickel, de titane et de titane plaqué ou revêtu.

14. Produit de type feuille de brasage selon l'une quelconque des revendications 1 à 12, dans lequel la couche métallique de coeur est constituée d'un alliage d'aluminium, choisi de préférence dans l'ensemble constitué des alliages d'aluminium des séries AA3xxx, AA5xxx et AA6xxx.

15. Produit de type feuille de brasage selon l'une quelconque des revendications 1 à 14, dans lequel la couche plaquée comprenant du silicium à raison de 4 à 14 % en poids et l'ensemble des couches extérieures à la première forment ensemble un métal d'apport pour une opération de brasage, métal d'apport dont la composition pondérale correspond au moins aux pourcentages suivants :
Si dans l'intervalle allant de 5 à 14 %
Fe dans l'intervalle allant de 0,15 à 8 %
X dans l'intervalle allant de 0,01 à 7 %, X étant au moins des éléments choisis dans le groupe constitué de l'étain Sn, du zinc Zn, du manganèse Mn et du cuivre Cu
Sn dans l'intervalle allant de 0,0 à 0,3 %, s'il ne correspond pas à X
Zn dans l'intervalle allant de 0,0 à 0,3 %, s'il ne correspond pas à X
Mn dans l'intervalle allant de 0,0 à 0,3 %, s'il ne correspond pas à X
Cu dans l'intervalle allant de 0,0 à 0,3 %, s'il ne correspond pas à X
éventuellement au moins l'un des éléments parmi le bismuth Bi, l'antimoine Sb, l'indium In et le plomb Pb,
Bi étant dans l'intervalle allant de 0,0 à 0,3 %,
Sb étant dans l'intervalle allant de 0,0 à 0,3 %,
In étant dans l'intervalle allant de 0,0 à 0,3 %,
Pb étant dans l'intervalle allant de 0,0 à 0,3 %,
Ti dans l'intervalle allant de 0,0 à 0,1 %
Sr dans l'intervalle allant de 0,0 à 0,1 %
Mg dans l'intex-valle allant de 0,0 à 0,1 %
le reste étant de l'aluminium et des impuretés inévitables,
et à condition que le rapport molaire Fe/X se situe dans l'intervalle allant de 10/0,3 à 10/6, de préférence dans l'intervalle allant de 10/0,5 à 10/5.

16. Procédé de fabrication d'un produit de type feuille de brasage selon l'une quelconque des revendication 1 à 15, comprenant les étapes suivantes :
(a) prendre un produit de type feuille de brasage comportant une feuille métallique de coeur, sur au moins un côté de ladite feuille de coeur, une couche plaquée d'un alliage de brasage à base d'aluminium comprenant du silicium à hauteur de 4 à 14 pour cent en poids,
(b) préchauffer à la surface extérieure de l'alliage plaqué
(c) revêtir une couche métallique à la surface extérieure de la surface extérieure prétraitée de l'alliage plaqué, ladite couche métallique comprenant un alliage fer-X, où X est choisi parmi un ou plusieurs des éléments du groupe constitué d'étain, de zinc, de manganèse et de cuivre.

17. Procédé selon la revendication 16, **caractérisé en ce qu'**au cours de l'étape (b), la surface extérieure de la couche plaquée est prétraitée par application d'une couche de liaison

18. Procédé selon la revendication 16 ou 17, **caractérisé en ce qu'**au cours de l'étape (b), la surface extérieure de la couche plaquée est prétraitée par application d'une couche de liaison de zinc ou d'étain.

19. Procédé selon l'une quelconque des revendications 16 à 18, **caractérisé en ce qu'**après application de ladite couche de liaison et avant application de la couche métallique comprenant un alliage de fer-X, on applique, de préférence par placage, une couche comprenant plus de 85 % en poids de fer.

20. Procédé selon l'une quelconque des revendications 16 à 19, **caractérisé en ce que** la couche métallique est revêtue sur la surface extérieure de la surface extérieure prétraitée de l'alliage plaqué par placage.

21. Procédé selon l'une quelconque des revendications 16 à 19, **caractérisé en ce que** la couche métallique est revêtue sur la surface extérieure de la surface extérieure prétraitée de l'alliage plaqué par PVD.

22. Ensemble de composants à joindre par brasage, parmi lesquels au moins un composant est un produit de type feuille de brasage selon l'une quelconque des revendications 1 à 15.

23. Ensemble selon la revendication 22, **caractérisé en ce que** l'on peut braser l'ensemble sous vide ou dans une atmosphère inerte, en l'absence de matière formant flux de brasage.
